# EUROPÄISCHE PATENTSCHRIFT

(11) **EP 4 305 951 B1**
(45) Veröffentlichungstag und Bekanntmachung des Hinweises auf die Patenterteilung: **19.02.2025**
(21) Anmeldenummer: 23170527.8
(22) Anmeldetag: 28.04.2023
(51) Int. Cl.: A01D 61/00, A01D 61/02

(54) **BANDSCHNEIDWERK**
DRAPER HEAD
BARRE DE COUPE À TAPIS

(30) Priorität: 05.07.2022 DE 102022116765
(43) Veröffentlichungstag der Anmeldung: 17.01.2024
(73) Patentinhaber: CLAAS Hungária Kft., 5200 Törökszentmiklós (HU)
(72) Erfinder: Füchtling, Christian, 48317 Drenstein Rinkerode (DE); Zelenyánszki, Tamás, 5600 Békéscsaba (HU)
(74) Vertreter: CLAAS 365FarmNet GmbH

(56) Entgegenhaltungen:
- EP-A1- 3 153 003
- US-A1- 2015 000 240
- US-A1- 2018 084 724
- US-A1- 2019 014 720
- US-B2- 11 147 212
- US-B2- 8 091 330

## Beschreibung

Die vorliegende Erfindung betrifft ein Bandschneidwerk gemäß dem Oberbegriff des Anspruches 1.

Bandschneidwerke umfassen einen Rahmen mit einem zumindest ein endlos umlaufendes Mittenband aufweisenden Mittensegment und zwei jeweils zumindest ein lateral förderndes, endlos umlaufendes Seitenband aufweisenden Seitensegmente sowie einen Messerbalken. Die Seitenbänder sind, in Fahrtrichtung gesehen, unter einem Winkel zum Messerbalken hingeneigt angeordnet. Diese Anordnung hat zur Folge, das Körner, die sich bei der Aufnahme des Ernteguts aus diesem herausgelöst haben, auf den Seitenbändern zur Vorderkante der Seitenbänder in Richtung Messerbalken rollen. Damit diese Körner nicht vom Seitenband zurück zum Messerbalken fallen, ist es erforderlich, einen Rieselschutz beziehungsweise eine Barriere im Bereich der dem Messerbalken zugewandten vorderen Seite des Seitenbandes vorzusehen. Des Weiteren muss die vordere Seite des Seitenbandes im Übergang zum Messerbalken soweit abgedichtet sein, dass möglichst keine Körner zwischen den Messerbalken und das Seitenband gelangen können.

Die US 7,472,533 B2 beschreibt ein Bandschneidwerk, dessen Messerbalken ein C-förmiges Profilbauteil aufweist, welches die vordere Seite des umlaufenden Seitenbandes umschließt. Zusätzlich weist das Seitenband an seiner Vorderkante einen Streifen aus einem elastischen Material auf. Der Streifen bildet zusammen mit dem C-förmigen Profilbauteil eine Art Barriere, um die in Richtung Messerbalken zurückrollenden Körner aufhalten. Um zu gewährleisten, dass der Streifen an dem C-förmigen Profilbauteil flächig anliegt, ist ein im jeweiligen Seitenband befindlicher Rahmen vorgesehen, welcher die gutfördernde Bandoberseite in ihrer erforderlichen Position hält. Damit eine Abdichtung zwischen dem Seitenband und dem C-förmigen Profilbauteil erreicht wird, ist eine sehr präzise Einstellung dieser Rahmen erforderlich.

Aus der US 7,908,836 B1 ist ein mit dem aus der US 7,472,533 B2 vergleichbarer Aufbau zur Abdichtung von Seitenbändern gegenüber dem Messerbalken an einem Bandschneidwerk bekannt.

Die aus der US 7,472,533 B2 und der US 7,908,836 B1 bekannten Lösungen weisen, neben ihrer Komplexität und der aufwendigen Einstellung, zudem die Einschränkung auf, dass diese Lösungen keine Anwendung an einem Bandschneid mit flexiblem Messerbalken und flexiblen Seitenbändern ermöglichen.

Ein Bandschneidwerk der eingangs genannten Art ist aus der US 8,091,330 B2 bekannt. Zur Abdichtung ist eine umlaufende Rippe auf der gutfördernden Oberfläche des jeweiligen Seitenbandes angeordnet, welche zur Vorderkante des Seitenbandes beabstandet ist. Der Bereich vom Messerbalken auf das jeweilige Seitenband wird mit Übergangsblechen überdeckt. Die Übergangsbleche erstrecken sich über die umlaufende Rippe an der Vorderkante des jeweiligen Seitenbandes hinweg, wobei zwischen den Übergangsblechen und der umlaufenden Rippe ein Spalt von weniger als 0,6 mm verbleibt. Um ein durchgehendes Aufliegen zu gewährleisten, üben die Übergangsbleche eine in Richtung der Oberfläche des Seitenbandes gerichtete Auflagekraft aus, die aufgrund der Vertikalbewegungen von Messerbalken und Seitenbändern ungleichmäßig und unkontrolliert ausgeübt auf die Rippe wird. Entweder ist die ausgeübte Auflagekraft so groß, dass die Übergangsbleche so stark auf der Rippe aufliegen bzw. gegen diese gedrückt werden, dass das Seitenband respektive die umlaufende Rippe dauerhaft Schaden nimmt, oder die Übergangsbleche stehen von der Rippe so weit ab, dass die Funktion der Abdichtung versagt, wobei neben Erntegut auch Halme oder Stängel zwischen Messerbalken und Seitenband gelangen.

Ausgehend vom vorstehend genannten Stand der Technik liegt der Erfindung die Aufgabe zugrunde, ein Bandschneidwerk der eingangs genannten Art weiterzubilden, welches die Nachteile des Standes der Technik vermeidet und sich insbesondere durch eine funktional verbesserte und verschleißärmere Abdichtung auszeichnet.

Diese Aufgabe wird durch ein Bandschneidwerk mit den Merkmalen des unabhängigen Patentanspruchs 1 gelöst. Vorteilhafte Ausführungsformen und Weiterbildungen sind den hiervon abhängigen Ansprüchen zu entnehmen.

Gemäß dem Anspruch 1 wird ein Bandschneidwerk vorgeschlagen, welches einen Rahmen mit einem zumindest ein endlos umlaufendes Mittenband aufweisenden Mittensegment und zwei jeweils zumindest ein lateral förderndes, endlos umlaufendes Seitenband aufweisenden Seitensegmenten sowie einen flexiblen Messerbalken, welcher an schwenkbar an dem Rahmen angelenkten Tragarmen angeordnet ist, umfasst, wobei die Seitenbänder dazu eingerichtet sind, einer Bewegung des flexiblen Messerbalkens zu folgen. Erfindungsgemäß ist vorgesehen, dass das jeweilige Seitenband im zum Messerbalken benachbarten Gutannahmebereich eine umlaufende Begrenzungsrippe aufweist, welche von einer sich im Wesentlichen über die Breite des Seitensegmentes erstreckenden Bandabdichtung überlappt ist, wobei die Bandabdichtung mittels segmentiert ausgeführter Halteelemente an dem Messerbalken befestigt ist und wobei die Halteelemente eine Druckkraft auf die Bandabdichtung ausüben, um diese gegen die Begrenzungsrippe zu drücken. Indem die Halteelemente segmentiert ausgeführt sind, können diese die Bewegungen des Messerbalkens durch Relativbewegungen gegenüber unmittelbar benachbart angeordneten Halteelementen nachvollziehen. Dies wiederum hat den Effekt, dass die von den Halteelementen auf die Bandabdichtung ausgeübte Druckkraft geringeren Schwankungen unterworfen ist, wodurch unabhängiger von Vertikalbewegungen des flexiblen Messerbalkens und damit korrespondierend des jeweiligen Seitenbandes ein gleichmäßigerer Auflagedruck ausgeübt wird. Das Auftreten von Spalten zwischen der Bandabdichtung bzw. den Halteelementen und der Begrenzungsrippe wird reduziert, wodurch die Gefahr des Eintretens von Erntegut reduziert wird. Weiterhin wird der Verschleiß der Begrenzungsrippe minimiert bzw. auf die Bandabdichtung verlagert. Letztere ist einfacher und kostengünstiger auswechselbar als ein beschädigtes Seitenband, welches verschleißbedingt seine Dichtfunktion nicht mehr ausüben kann.

Bevorzugt kann die Bandabdichtung aus einem flexiblen Material bestehen, insbesondere aus einem Kunststoff oder Gummi. Somit kann das Verschleißverhalten der Bandabdichtung beeinflusst werden. Ebenfalls kann die erforderliche Elastizität der Bandabdichtung durch eine geeignete Materialauswahl bereitgestellt werden, um der dynamischen Wechselbelastung besser zu widerstehen. Weiter bevorzugt kann die Bandabdichtung aus einem gummielastischen Material bestehen. Die Verwendung eines geeigneten gummielastischen Materials für die Bandabdichtung ermöglicht eine reversible Verformung der Bandabdichtung. Darüber hinaus besitzt ein geeignetes gummielastisches Material die erforderliche Steifigkeit, um die von den Halteelementen ausgeübte Druckkraft auf die Begrenzungsrippe zu übertragen, wodurch ein bevorzugt flächiger Kontakt der Bandabdichtung mit der Begrenzungsrippe weitgehend erhalten bleibt.

Vorteilhaft ist, dass ein zwischen der Begrenzungsrippe und den Halteelementen ausgebildeter überlappungsfreier Bereich von der Bandabdichtung überdeckt ist. Durch den überlappungsfreien Bereich wird ein direktes Anpressen der Bandabdichtung gegen die Begrenzungsrippe vermieden. Vielmehr kann durch die Materialeigenschaft der Bandabdichtung der von den Halteelementen ausgeübte Druck einfacher einstellt werden.

Bevorzugt kann die Begrenzungsrippe mit der Bandabdichtung eine Barriere mit einer Höhe zwischen 10 mm und 15 mm ausbilden. Aufgrund der Neigung des jeweiligen Seitenbandes wird in Richtung Messerbalken rollendes Erntegut von dieser sich in vertikaler Richtung erstreckenden Barriere aufgehalten und kann sich davor ansammeln. Wegen der Höhe dieser Barriere lassen sich auch größere Körner aufhalten, um seitlich weitergefördert zu werden, wodurch Kornverluste verringert werden können. Die durch die Begrenzungsrippe und die Bandabdichtung gebildete vertikale Barriere bietet dem Gutfluss auch weniger Störkonturen.

Insbesondere kann die Begrenzungsrippe einen im Wesentlichen quaderförmigen oder trapezförmigen Querschnitt aufweisen. Wesentlich ist, dass sich auf der der Bandabdichtung zugewandten Oberseite der Begrenzungsrippe eine Auflagefläche ausbildet. Die Auflagefläche ist, in Förderrichtung gesehen, durchgehend ausgeführt und weist eine im Wesentlichen plane Oberfläche auf. Dies dient dazu, um die von den Haltelementen mittels der Bandabdichtung mittelbar aufgebrachte Druckkraft möglichst gleichmäßig aufzunehmen.

Bevorzugt kann das jeweilige Halteelement bezogen auf das jeweilige Seitenband einen geneigten, dem Messerbalken zugewandten vorderen Abschnitt und einen im Wesentlichen parallelen, dem Seitenband zugewandten hinteren Abschnitt aufweisen. Mittels ihres vorderen Abschnitts können die Halteelemente am Messerbalken befestigt sein. Hierzu kann das jeweilige Halteelement mit einer Schraubverbindung lösbar am Messerbalken befestigt sein. Mittels des hinteren Abschnitts des jeweiligen Halteelementes kann die Bandabdichtung an den Halteelementen lösbar befestigt werden. Hierdurch kann ein erforderlicher Austausch der Bandabdichtung vereinfacht werden. Der Winkel, den der vordere Abschnitt und der hintere Abschnitt des jeweiligen Halteelementes einschließen, bestimmt die Druckkraft, die mittelbar durch die Bandabdichtung auf die Begrenzungsrippe ausgeübt wird.

Vorzugsweise können die Halteelemente als aus einem Metallblech gefertigte Profilteile ausgeführt sein. Dabei kann es sich um Gleichteile handeln, die beispielsweise durch Laserstrahlschneiden oder Stanzen und anschließende Umformprozesse in großer Stückzahl herstellbar sind.

Gemäß einer Weiterbildung kann die streifenförmig ausgebildete, einen quaderförmigen Querschnitt aufweisende Bandabdichtung ein- oder mehrteilig ausgeführt sein. Bevorzugt ist die Bandabdichtung eines jeden Seitensegments einteilig ausgeführt. Insbesondere schließen die Begrenzungsrippe und die Bandabdichtung mit ihren vertikalen Stirnflächen auf ihrer dem Messerbalken abgewandten Seite im Wesentlichen bündig ab. Somit kann die Ausbildung einer Stoßkante im Übergang von der Begrenzungsrippe zur Bandabdichtung vermieden werden.

Gemäß einer bevorzugten Weiterbildung kann auf der Oberfläche der Seitenbänder zwischen senkrecht zur Begrenzungsrippe verlaufenden, zueinander äquidistant angeordneten Förderrippen jeweils zumindest eine muldenförmige oder bogenförmige Auffangrippe angeordnet sein, deren offene Seite dem Messerbalken abgewandt ist. Die muldenförmigen oder bogenförmigen Auffangrippen sind im Wesentlichen parallel zur Begrenzungsrippe verlaufend angeordnet. Das Vorsehen von Auffangrippen auf der gutfördernden Oberfläche der Seitenbänder trägt zu einer Verbesserung des Rieselschutzes bei. Durch die muldenförmigen oder bogenförmigen Auffangrippen werden auf das Seitenband fallende Körner in den Bereich der Anordnung der Auffangrippen aufgehalten. Weiterhin können rollende Körner durch die Auffangrippen verlangsamt werden, so dass diese nicht mit so hoher Geschwindigkeit zurück zum Messerbalken rollen, dass diese unter Umständen die vertikale Barriere aus Begrenzungsrippe und Bandabdichtung überspringen. Somit können Verluste im Bereich der Seitenbänder gezielt vermieden werden.

Insbesondere können die in zumindest einer Reihe angeordneten Auffangrippen in einem Abstand zur Begrenzungsrippe angeordnet sein, so dass sich die Auffangrippen stets im Annahmebereich des zumindest einen Mittenbandes befinden. Dies ist besonders vorteilhat, da das zumindest eine Mittenband einen größeren Abstand zum Messerbalken aufweist als die Seitenbänder. Damit wird das Risiko von Verlusten im Bereich des Mittensegmentes auf ein Minimum reduziert. Die Position der muldenförmigen oder bogenförmigen Auffangrippen ist gezielt auf das Mittenband ausgerichtet, so dass die von den Auffangrippen aufgehaltenen Körner auf das Mittenband gefördert werden und nicht im Bereich zwischen dem Messerbalken und dem Mittenband abgegeben werden, in welchem das Mittenband, wegen der Beabstandung zum Messerbalken, die Körner nicht aufnehmen kann.

Dazu können die muldenförmigen oder bogenförmigen Auffangrippen, ausgehend vom Messerbalken, oberhalb des unteren Drittels des Seitenbands angeordnet sein. Dadurch können die aufs Band fallenden Körner gezielt im oberen und mittleren Bereich des Seitenbandes gehalten werden.

Des Weiteren können sich die Auffangrippen im Wesentlichen bis an die Förderrippen erstrecken. Somit verbleiben nur geringe seitliche Spalte zwischen den Endbereichen der jeweiligen muldenförmigen oder bogenförmigen Auffangrippe und den zu diesen benachbarten Förderrippen.

Gemäß einer bevorzugten Weiterbildung kann das Mittensegment zumindest ein Mittenband aufweisen, welches senkrecht zur Förderrichtung der Seitenbänder orientiert ist.

Alternativ kann das Mittensegment zwei V-förmig nebeneinander angeordnete Mittenbänder aufweisen, die in ihrer Förderrichtung gesehen aufeinander zulaufend angeordnet sind.

Die vorliegende Erfindung wird nachstehend anhand eines in den Zeichnungen dargestellten Ausführungsbeispieles näher erläutert.

Es zeigen:
- Fig. 1: exemplarisch und schematisch eine Darstellung eines Bandschneidwerkes;
- Fig. 2: exemplarisch und schematisch eine Teilansicht eines Messerbalkens eines Seitensegmentes des Bandschneidwerkes;
- Fig. 3: exemplarisch und schematisch eine Ansicht auf einen Teilabschnitt eines Seitenbandes gemäß Fig. 2 von schräg oben;
- Fig. 4: exemplarisch und schematisch eine Ansicht auf ein Mittensegment des Bandschneidwerkes gemäß Fig. 1 von oben; und
- Fig. 5: exemplarisch und schematisch eine Ansicht auf ein Mittensegment des Bandschneidwerkes gemäß einer weiteren Ausführungsform.

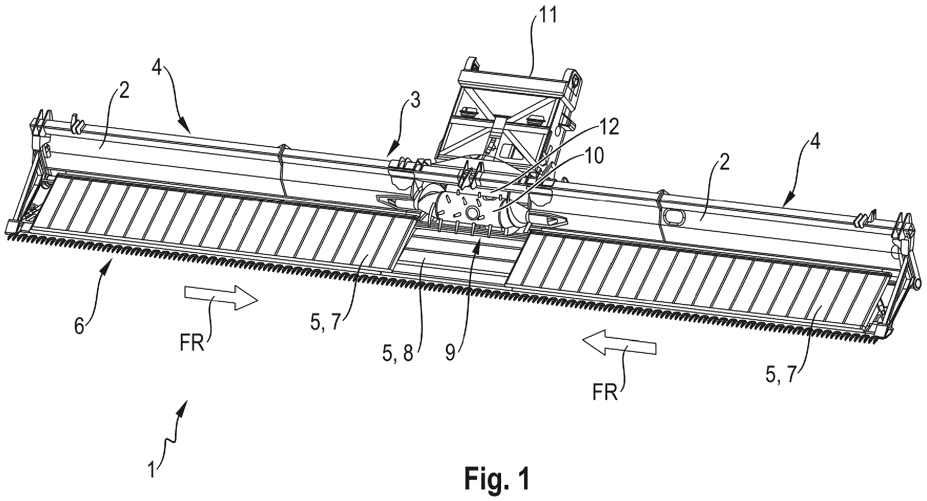

Fig. 1 zeigt exemplarisch und schematisch eine Darstellung eines Bandschneidwerkes 1. Das Bandschneidwerk 1 umfasst ein Mittensegment 3 und mindestens zwei benachbart zu dem Mittensegment 3 angeordnete Seitensegmente 4. Das Schneidwerk 1 weist einen Rahmen 2 auf. Der Rahmen 2 kann segmentiert ausgeführt sein. Dabei können das Mittensegment 3 und die Seitensegmente 4 jeweils einzelne Rahmensegmente aufweisen, an denen diese angeordnet sind. Die Rahmensegmente können zusammen den segmentierten Rahmen 2 bilden. Zwei äußere Rahmensegmente können schwenkbar an einem inneren Rahmensegment angeordnet sein.

An dem Mittensegment 3 und den Seitensegmenten 4 ist auf der dem Rahmen 2 gegenüberliegenden Vorderseite des Bandschneidwerkes 1 ein bodenkopierender flexibler Messerbalken 6 angeordnet, der sich im Wesentlichen über die gesamte Breite des Bandschneidwerkes 1 erstreckt. Der flexible Messerbalken 6, welcher an schwenkbar an dem Rahmen 2 angelenkten Tragarmen angeordnet ist, kann aufgrund von Bodenunebenheiten eine Auslenkung in vertikaler Richtung um eine Horizontallage erfahren. Dabei kann der flexible Messerbalken 6 in positiver Richtung nach oben vom Boden weg und in negativer Richtung nach unten zum Boden hin ausgelenkt werden.

Das von dem Messerbalken 6 abgetrennte Erntegut wird einer hinter dem Messerbalken 6 angeordneten Fördervorrichtung 5 zugeführt, die auf den jeweiligen Seitenabschnitten 4 als mindestens ein endlos umlaufendes Seitenband 7 ausgeführt ist. Die endlos umlaufenden Seitenbänder 7 der Seitensegmente 4 sind jeweils benachbart zu dem Mittensegment 3 angeordnet, um von dem Messerbalken 6 abgeschnittenes Erntegut seitwärts in einer Förderrichtung FR zum Mittensegment 3 zu transportieren und einer Einzugsvorrichtung 9 zuzuführen. Die Seitenbänder 7 sind dazu eingerichtet, einer Bewegung des flexiblen Messerbalkens 6 zu folgen.

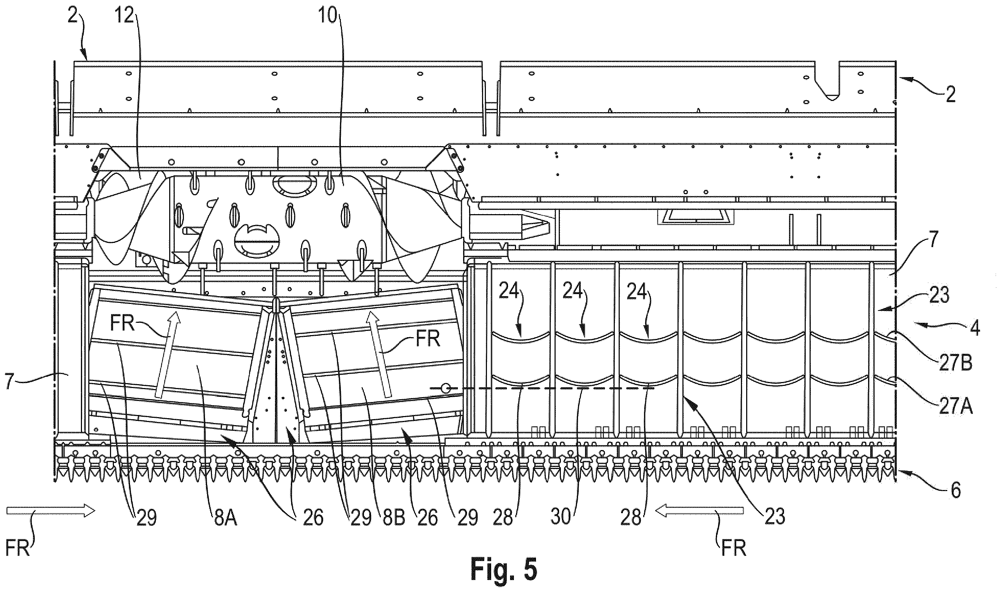

Das Mittensegment 3 umfasst ebenfalls eine als zumindest ein endlos umlaufendes Mittenband 8 ausgebildete Fördervorrichtung 5. Das zumindest eine Mittenband 8 des Mittensegmentes 3 fördert dabei quer zur Förderrichtung FR der Seitenbänder 7 der Seitensegmente 4. Andere Ausgestaltungen der Fördervorrichtung 5 im Bereich des Mittensegments 3 sind denkbar, wie weiter unten anhand einer in Fig. 5 dargestellten Ausführungsform erläutert wird. Die Einzugsvorrichtung 9 ist als eine antreibbare Einzugswalze 10 ausgeführt. Die Einzugsvorrichtung 9 führt das von den endlos umlaufenden Seitenbändern 7 dem Mittensegment 3 seitlich zugeführte Erntegut einer in dem Rahmen 2 des Mittensegments 3 vorgesehenen, hinter der Einzugswalze 10 befindlichen Öffnung 12 zu, durch welche das aufgenommene Erntegut durch einen an einem nicht dargestellten Mähdrescher befindlichen Einzugskanal 11, an dem das Bandschneidwerk 1 lösbar befestigt ist, dem Mähdrescher zur weiteren Verarbeitung zugeführt wird.

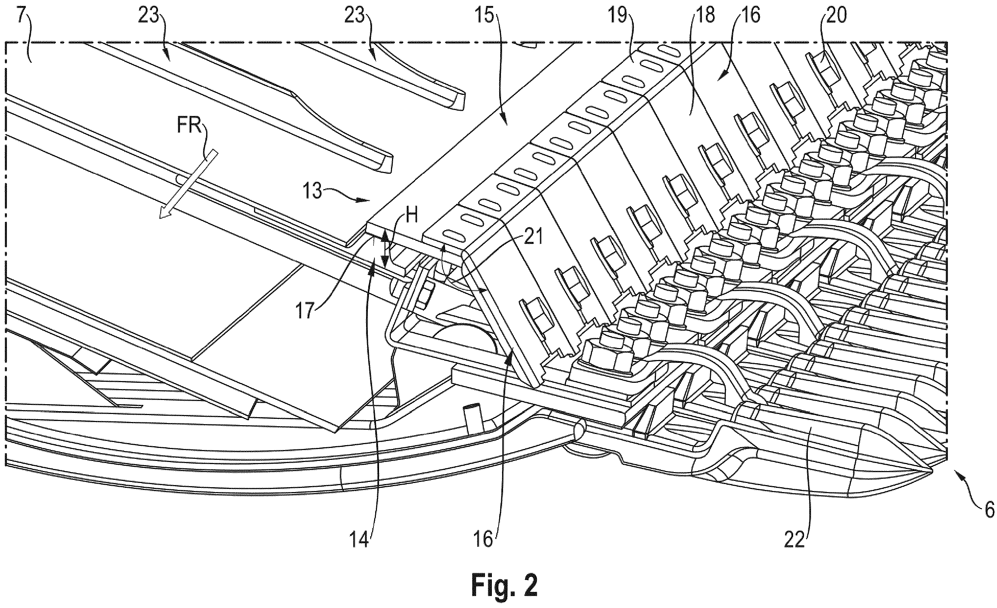

Fig. 2 zeigt exemplarisch und schematisch eine Teilansicht des Messerbalkens 6 eines der Seitensegmente 4 des Bandschneidwerkes 1. Die Seitensegmente 4 sind baugleich ausgeführt, so dass die nachfolgen Erläuterungen für beide Seitensegmente 4 Gültigkeit haben.

Das jeweilige Seitenband 7 weist im zum Messerbalken 6 benachbarten Gutannahmebereich 13 eine umlaufende Begrenzungsrippe 14 auf, die parallel zum Messerbalken 6 verläuft. Die Begrenzungsrippe 14 ist auf der gutfördernden Oberseite des Seitenbandes 7 angeordnet. Die Begrenzungsrippe 14 ist von einer sich im Wesentlichen über die Breite des Seitensegmentes 4 erstreckenden Bandabdichtung 15 überlappt. Die Bandabdichtung 15 ist mittels segmentiert ausgeführter Halteelemente 16 an dem Messerbalken 6 befestigt. Die Begrenzungsrippe 14 weist einen im Wesentlichen quaderförmigen oder trapezförmigen Querschnitt auf. Somit bildet sich eine zur gutfördernden Oberseite des Seitenbandes 7 parallele Auflagefläche 17 aus. Die Auflagefläche 17 ist, in Förderrichtung FR gesehen, durchgehend ausgeführt und weist eine im Wesentlichen plane Oberfläche auf. Die Halteelemente 16 üben eine Druckkraft auf die Bandabdichtung 15 aus, um die Bandabdichtung 15 gegen die Auflagefläche 17 an der Oberseite der Begrenzungsrippe 14 zu drücken.

Die Bandabdichtung 15 besteht aus einem flexiblen Material, insbesondere aus einem Kunststoff oder Gummi. Somit kann das Verschleißverhalten der Bandabdichtung 15 beeinflusst werden. Ebenfalls kann die erforderliche Elastizität der Bandabdichtung 15 durch eine geeignete Materialauswahl bereitgestellt werden, um der dynamischen Wechselbelastung besser zu widerstehen. Bevorzugt kann die Bandabdichtung 15 aus einem gummielastischen Material bestehen. Die Verwendung eines geeigneten gummielastischen Materials für die Bandabdichtung 15 ermöglicht eine reversible Verformung der Bandabdichtung 15. Darüber hinaus besitzt ein geeignetes gummielastisches Material die erforderliche Steifigkeit, um die von den Halteelementen 16 ausgeübte Druckkraft auf die Begrenzungsrippe 14 zu übertragen, wodurch der flächige Kontakt der Bandabdichtung 15 mit der Begrenzungsrippe 14 weitgehend erhalten bleibt.

Die Begrenzungsrippe 14 bildet mit der Bandabdichtung 15 eine Barriere mit einer Höhe H zwischen 10 mm und 15 mm aus. Somit können auch größere Körner, beispielsweise Maiskörner, Bohnen oder dergleichen, von der Barriere aufgehalten werden.

Das jeweilige Halteelement 16 weist bezogen auf das jeweilige Seitenband 7 einen geneigten, dem Messerbalken 6 zugewandten vorderen Abschnitt 18 und einen im Wesentlichen parallelen, dem Seitenband 7 zugewandten hinteren Abschnitt 19 auf. Das jeweilige Halteelement 16 ist mittels einer Verschraubung 20 lösbar am Messerbalken 6 befestigt. Mittels des hinteren Abschnitts 19 des jeweiligen Halteelementes 16 kann die Bandabdichtung 15 an den Halteelementen 16 lösbar befestigt sein. Die Bandabdichtung 15 ist an der dem Seitenband 4 zugewandten Unterseite des hinteren Abschnitts 19 der Halteelemente 16 angeordnet. Dies kann bevorzugt ebenfalls durch eine Verschraubung erfolgen. Hierdurch kann ein erforderlicher, verschleißbedingter Austausch der Bandabdichtung 15 vereinfacht werden. Ein Winkel 21, den der vordere Abschnitt 18 und der hintere Abschnitt 19 des jeweiligen Halteelementes 16 einschließen, bestimmt die Drucckraft, die mittelbar durch die Bandabdichtung 15 auf die Auflagefläche 17 der Begrenzungsrippe 14 ausgeübt wird.

Ein zwischen der Begrenzungsrippe 14 und den Halteelementen 16 ausgebildeter überlappungsfreier Bereich ist von der Bandabdichtung 15 überdeckt. Der überlappungsfreie Bereich bildet sich zwischen der Stirnseite des hinteren Abschnitts 19 des jeweiligen Halteelementes 16 und der Auflagefläche 17 der Begrenzungsrippe 14 aus. Somit wird von den Halteelementen 16 keine unmittelbare Druckkraft auf die Begrenzungsrippe 14 ausgeübt, wie dies im gattungsgemäßen Stand der Technik der Fall ist. Ein wesentlicher Effekt besteht darin, dass der Verschleiß im Wesentlichen auf die Bandabdichtung 15 verlagert wird. Aufgrund der Elastizität der Bandabdichtung 15 wird die Spaltbildung zwischen der der Begrenzungsrippe 14 und der Bandabdichtung 15 minimiert, wenn es durch eine abschnittsweise vertikale Auslenkung des Messerbalkens 6 und des Seitenbandes 4 zu einer im Wesentlichen bogenförmigen Verformung kommt, deren Bewegung auf die Halteelemente 16 übertragen wird.

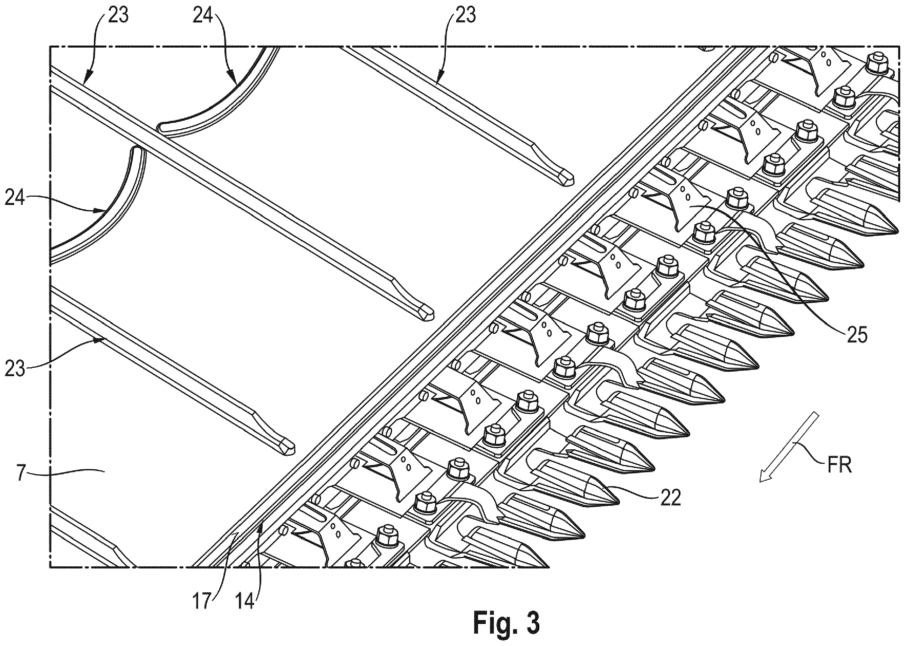

Die segmentierten Halteelementen 16 können eine durch eine Vertikalbewegung des Messerbalkens 6 initiierte Relativbewegung zueinander um eine zum Messerbalken 6 senkrecht verlaufende Achse ausführen. Dazu kann jedem am Messerbalken 6 angeordneten Messerfinger 22 jeweils ein Halteelement 16 zugeordnet sein. Im vorliegenden Ausführungsbeispiel des Messerbalkens sind die Messerfinger 22 als Doppelfinger ausgeführt, wie aus Fig. 3 ersichtlich ist.

Die Halteelemente 16 sind insbesondere als aus einem Metallblech gefertigte Profilteile ausgeführt. Dies ermöglicht eine kostengünstige Herstellung der Halteelemente 16 in großer Stückzahl.

Die streifenförmig ausgebildete, einen quaderförmigen Querschnitt aufweisende Bandabdichtung 15 kann ein- oder mehrteilig ausgeführt sein. So kann sich die Bandabdichtung 15 als Einzelelement vollständig über die Breite eines Seitensegmentes 4 erstrecken oder aus zwei oder mehr Einzelelementen bestehen, die nebeneinander an den Halteelementen 16 angeordnet sind.

Auf der gutfördernden Oberfläche der Seitenbänder 7 sind senkrecht zur Begrenzungsrippe 14 verlaufende, zueinander äquidistant angeordneten Förderrippen 23 angeordnet. Die Förderrippen 23 erstrecken sich bis zum Gutannahmebereich 13 und enden vor der Begrenzungsrippe 14 in einem Abstand zu dieser. Zwischen den Förderrippen 23 ist jeweils zumindest eine muldenförmige oder bogenförmige Auffangrippe 24 angeordnet, deren offene Seite dem Messerbalken 6 abgewandt ist, wie in den Fig. 3 bis 5 dargestellt ist.

Die Darstellung in Fig. 3 zeigt exemplarisch und schematisch eine Ansicht auf einen Teilabschnitt des Seitenbandes 7 gemäß Fig. 2 von schräg oben. Die Darstellung zeigt den Teilabschnitt des Seitenbandes 7 ohne die Halteelemente 16 sowie die daran angeordnete Bandabdichtung 15. Zu sehen sind abgewinkelte Befestigungsbleche 25, welche der lösbaren Aufnahme der Halteelemente 16 dienen, die im Bereich zwischen dem Seitenband 7 und den Messerfingern 22 am Messerbalken 6 angeordnet sind.

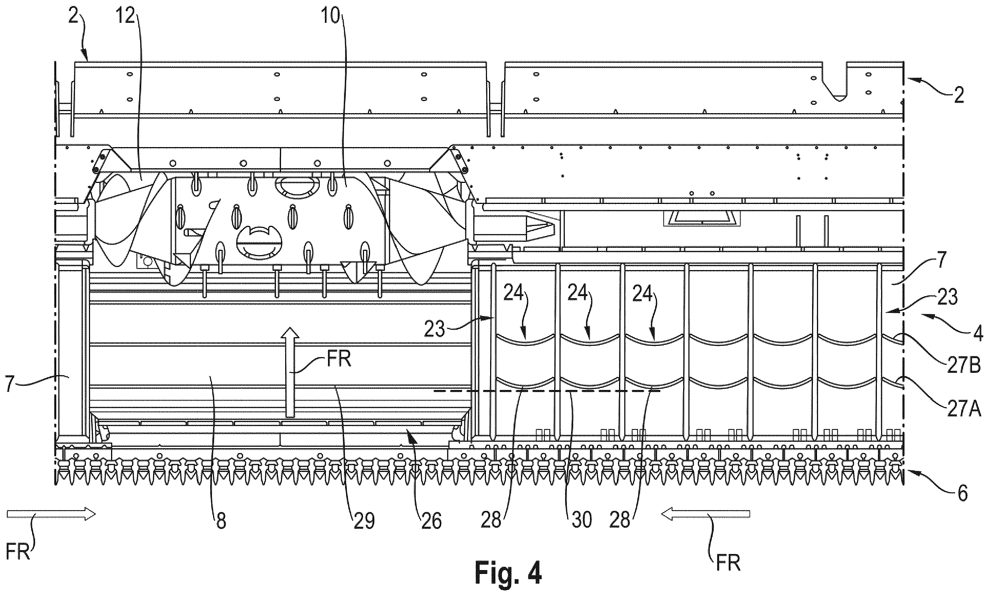

In Fig. 4 ist exemplarisch und schematisch eine Ansicht auf das Mittensegment 3 des Bandschneidwerkes 1 gemäß Fig. 1 von oben dargestellt. Das Mittenband 8 des Mittensegments 3 fördert quer zur Förderrichtung FR der Seitenbänder 7 in Richtung der Einzugswalze 10. Im Unterschied zu den Seitenbändern 7, welche mit ihrer Vorderkante, an der die Begrenzungsrippe 14 angeordnet ist, nahezu unmittelbar an den Messerbalken 6 angrenzen, weist die Vorderkante des Mittenbandes 8 einen größeren Abstand zum Messerbalken 6 auf. Bedingt durch den gegenüber den Seitenbändern 7 größeren Abstand des Mittenbandes 8 zum Messerbalken 6 bildet sich an den dem Mittenband 8 zugewandten Enden der Seitenbänder 7 ein Bereich 26 aus, in welchem das Erntegut dem Mittenband 8 vor diesem zugeführt wird. Das Mittenband 8 weist, wie die Seitenbänder 7 auch, äquidistant angeordnete Förderrippen 29 auf, welche jedoch parallel zum Messerbalken 6 verlaufend auf dem Mittenband 8 angeordnet sind. In diesem Bereich 26 können Gutleitbleche oder dergleichen angeordnet sein, welche der passiven Zuführung des Erntegutes zum Mittenband 8 dienen.

Wie unter Bezugnahme auf Fig. 3 bereits ausgeführt, ist zwischen den Förderrippen 23 jeweils zumindest eine muldenförmige oder bogenförmige Auffangrippe 24 angeordnet, deren offene Seite dem Messerbalken 6 abgewandt ist. Die Auffangrippen 24 sind in zumindest einer Reihe 27A, 27B nebeneinander auf der gutfördernden Oberfläche des jeweiligen Seitenbandes 7 angeordnet. Die in einer Reihe 27A, 27B nebeneinander angeordneten Auffangrippen 24 sind in einem Abstand zur Begrenzungsrippe 14 angeordnet, so dass sich die Auffangrippen 24 stets im Annahmebereich des zumindest einen Mittenbandes 8 befinden. Der Annahmebereich ist der Bereich des Mittenbandes 8, in welchem das jeweilige Seitenband 7 das Mittenband 8 räumlich überlappt, sodass das Erntegut unmittelbar vom jeweiligen Seitenband 7 auf das Mittenband 8 gelangt.

Bevorzugt sind zwei Reihen 27A, 27B parallel zueinander verlaufend auf der gutfördernden Oberfläche der Seitenbänder 7 angeordnet. Die muldenförmigen oder bogenförmigen Auffangrippen 24 weisen aufgrund ihrer Form einen tiefsten Punkt 28 auf, in welchem sich die aufgehaltenen Körner sammeln können. Der Abstand der Reihe 27A mit Auffangrippen 24, welche dem Messerbalken 6 am nächsten auf den Seitenbändern 7 angeordnet ist, ist derart gewählt, dass der tiefste Punkt 28 der Auffangrippen 24 stets oberhalb der jeweiligen Förderrippe 29 liegt, welche die dem Messerbalken 6 nächstliegende Reihe 27A mit Auffangrippen 24 passiert. Dadurch wird erreicht, dass von den Auffangrippen 24 aufgehaltene Körner stets oberhalb einer Förderrippe 29 auf das Mittenband 8 gelangen. Veranschaulicht wird dies durch eine gestrichelte Linie 30, welche vom tiefsten Punkt 28 der Auffangrippe 24 der Reihe 27A ausgehend zum Mittenband 8 eingezeichnet ist.

Bevorzugt sind die Auffangrippen 24, ausgehend vom Messerbalken 6, oberhalb des unteren Drittels des jeweils Seitenbands 7 angeordnet. Ein weiterer Aspekt ist, dass sich die Auffangrippen 24 im Wesentlichen bis an die zu diesen senkrecht verlaufenden Förderrippen 23 erstrecken.

In Fig. 5 ist exemplarisch und schematisch eine Ansicht auf das Mittensegment 3 des Bandschneidwerkes 1 gemäß einer weiteren Ausführungsform dargestellt. Das Mittensegment 3 unterscheidet sich lediglich durch die Ausgestaltung der Fördervorrichtung 5. Das Mittensegment 3 weist zwei V-förmig nebeneinander angeordnete Mittenbänder 8A, 8B auf, die in ihrer jeweiligen Förderrichtung FR gesehen aufeinander zulaufend angeordnet sind. Die Ausgestaltung der Seitenbänder 4 entspricht der weiter oben beschriebenen.

**Bezugszeichenliste**

| | | | |
|---|---|---|---|
| 1 | Bandschneidwerk | FR | Förderrichtung |
| 2 | Rahmen | | |
| 3 | Mittensegment | | |
| 4 | Seitensegment | | |
| 5 | Fördervorrichtung | | |
| 6 | Messerbalken | | |
| 7 | Seitenband | | |
| 8 | Mittenband | | |
| 8A | Mittenband | | |
| 8B | Mittenband | | |
| 9 | Einzugsvorrichtung | | |
| 10 | Einzugswalze | | |
| 11 | Einzugskanal | | |
| 12 | Öffnung | | |
| 13 | Gutannahmebereich | | |
| 14 | Begrenzungsrippe | | |
| 15 | Bandabdichtung | | |
| 16 | Halteelement | | |
| 17 | Auflagefläche | | |
| 18 | Vorderer Abschnitt | | |
| 19 | Hinterer Abschnitt | | |
| 20 | Verschraubung | | |
| 21 | Winkel | | |
| 22 | Messerfinger | | |
| 23 | Förderrippe | | |
| 24 | Auffangrippe | | |
| 25 | Befestigungsblech | | |
| 26 | Bereich | | |
| 27A | Reihe | | |
| 27B | Reihe | | |
| 28 | Tiefster Punkt von 24 | | |
| 29 | Förderrippe | | |
| 30 | Linie | | |

## Patentansprüche

1. Bandschneidwerk (1), umfassend:
- einen Rahmen (2) mit einem zumindest ein endlos umlaufendes Mittenband (8, 8A, 8B) aufweisendes Mittensegment (3) und zwei jeweils zumindest ein lateral förderndes, endlos umlaufendes Seitenband (7) aufweisenden Seitensegmenten (4),
- einen flexiblen Messerbalken (6), welcher an schwenkbar an dem Rahmen (2) angelenkten Tragarmen angeordnet ist, wobei die Seitenbänder (7) dazu eingerichtet sind, einer Bewegung des flexiblen Messerbalkens (6) zu folgen,
**dadurch gekennzeichnet,**
**dass** das jeweilige Seitenband (7) im zum Messerbalken (6) benachbarten Gutannahmebereich (13) eine umlaufende Begrenzungsrippe (14) aufweist, welche von einer sich im Wesentlichen über die Breite des Seitensegmentes (4) erstreckenden Bandabdichtung (15) überlappt ist, wobei die Bandabdichtung (15) mittels segmentiert ausgeführter Halteelemente (16) an dem Messerbalken (6) befestigt ist, und wobei die Halteelemente (16) eine Druckkraft auf die Bandabdichtung (15) ausüben, um diese gegen die Begrenzungsrippe (14)zu drücken.

2. Bandschneidwerk (1) nach Anspruch 1, **dadurch gekennzeichnet, dass** die Bandabdichtung (15) aus einem flexiblen Material besteht, insbesondere aus einem Kunststoff oder Gummi.

3. Bandschneidwerk (1) nach Anspruch 1 oder 2, **dadurch gekennzeichnet, dass** ein zwischen der Begrenzungsrippe (14) und den Halteelementen (16) ausgebildeter überlappungsfreier Bereich von der Bandabdichtung (15) überdeckt ist.

4. Bandschneidwerk (1) nach einem der Ansprüche 1 bis 3, **dadurch gekennzeichnet, dass** die Begrenzungsrippe (14) mit der Bandabdichtung (15) eine Barriere mit einer Höhe zwischen 10 mm und 15 mm ausbildet.

5. Bandschneidwerk (1) nach einem der Ansprüche 1 bis 4, **dadurch gekennzeichnet, dass** die Begrenzungsrippe (14) einen im Wesentlichen quaderförmigen oder trapezförmigen Querschnitt aufweist.

6. Bandschneidwerk (1) nach einem der Ansprüche 1 bis 5, **dadurch gekennzeichnet, dass** das jeweilige Halteelement (16) bezogen auf das jeweilige Seitenband (7) einen geneigten, dem Messerbalken (6) zugewandten vorderen Abschnitt (18) und einen im Wesentlichen parallelen, dem Seitenband (7) zugewandten hinteren Abschnitt (19) aufweist.

7. Bandschneidwerk (1) nach Anspruch 6, **dadurch gekennzeichnet, dass** die Halteelemente (16) als aus einem Metallblech gefertigte Profilteile ausgeführt sind.

8. Bandschneidwerk (1) nach einem der Ansprüche 1 bis 7, **dadurch gekennzeichnet, dass** die streifenförmig ausgebildete, einen quaderförmigen Querschnitt aufweisende Bandabdichtung (15) ein- oder mehrteilig ausgeführt ist.

9. Bandschneidwerk (1) nach einem der Ansprüche 1 bis 8 **dadurch gekennzeichnet, dass** auf der Oberfläche der Seitenbänder (7) zwischen senkrecht zur Begrenzungsrippe (14) verlaufenden, zueinander äquidistant angeordneten Förderrippen (23) jeweils zumindest eine muldenförmige oder bogenförmige Auffangrippen (24) angeordnet ist, deren offene Seite dem Messerbalken (6) abgewandt ist.

10. Bandschneidwerk (1) nach Anspruch 9, **dadurch gekennzeichnet, dass** die in zumindest einer Reihe (27A, 27B) angeordneten Auffangrippen (24) in einem Abstand zur Begrenzungsrippe (14) angeordnet sind, so dass sich die Auffangrippen (24) stets im Annahmebereich des zumindest einen Mittenbandes (8, 8A, 8B) befinden.

11. Bandschneidwerk (1) nach Anspruch 9 oder 10, **dadurch gekennzeichnet, dass** die Auffangrippen (24), ausgehend vom Messerbalken (6), oberhalb des unteren Drittels des Seitenbands (7) angeordnet sind.

12. Bandschneidwerk (1) nach einem der Ansprüche 9 bis 11, **dadurch gekennzeichnet, dass** sich die Auffangrippen (24) im Wesentlichen bis an die Förderrippen (23) erstrecken.

13. Bandschneidwerk (1) nach einem der Ansprüche 1 bis 12, **dadurch gekennzeichnet, dass** das Mittensegment (3) zumindest ein Mittenband (8) aufweist, welches senkrecht zur Förderrichtung (FR) der Seitenbänder (7) orientiert ist

14. Bandschneidwerk (1) nach einem der Ansprüche 1 bis 12, **dadurch gekennzeichnet, dass** das Mittensegment (3) zwei V-förmig nebeneinander angeordnete Mittenbänder (8A, 8B) aufweist, die in ihrer Förderrichtung (FR) gesehen aufeinander zulaufend angeordnet sind.

## Claims

1. A draper cutting unit (1), comprising:
- a frame (2) with a centre segment (3) having at least one continuously revolving centre belt (8, 8A, 8B) and two side segments (4) respectively having at least one laterally-conveying, continuously revolving side belt (7),
- a flexible cutter bar (6) which is disposed on support arms which are pivotally articulated on the frame (2), wherein the side belts (7) are configured to follow a movement of the flexible cutter bar (6),
**characterized in that**
in the crop intake region (13) adjacent to the cutter bar (6), the respective side belt (7) has a circumferential marginal rib (14) which is overlapped by a belt seal (15) which extends substantially over the width of the side segment (4), wherein the belt seal (15) is fastened to the cutter bar (6) by means of segmented retaining elements (16), and wherein the retaining elements (16) exert a compressive force on the belt seal (15) in order to press it against the marginal rib (14).

2. The draper cutting unit (1) according to claim 1, **characterized in that** the belt seal (15) consists of a flexible material, in particular of a plastic or rubber.

3. The draper cutting unit (1) according to claim 1 or claim 2, **characterized in that** an overlap-free region formed between the marginal rib (14) and the retaining elements (16) is covered by the belt seal (15).

4. The draper cutting unit (1) according to one of claims 1 to 3, **characterized in that** the marginal rib (14) with the belt seal (15) forms a barrier with a height of between 10 mm and 15 mm.

5. The draper cutting unit (1) according to one of claims 1 to 4, **characterized in that** the marginal rib (14) has a substantially rectangular or trapezoidal cross section.

6. The draper cutting unit (1) according to one of claims 1 to 5, **characterized in that** relative to the respective side belt (7), the respective retaining element (16) has an inclined front section (18) which faces the cutter bar (6) and a substantially parallel rear section (19) which faces the side belt (7).

7. The draper cutting unit (1) according to claim 6, **characterized in that** the retaining elements (16) are constructed from profiled parts which are fabricated from sheet metal.

8. The draper cutting unit (1) according to one of claims 1 to 7, **characterized in that** the belt seal (15) which is in the form of a strip and has a rectangular cross section is constructed in one or more parts.

9. The draper cutting unit (1) according to one of claims 1 to 8, **characterized in that** on the surface of the side belts (7) between conveying ribs (23) which run perpendicularly to the marginal rib (14) and which are disposed equidistant from each other, there is a respective at least one trough-shaped or arcuate collecting rib (24) the open side of which faces away from the cutter bar (6).

10. The draper cutting unit (1) according to claim 9, **characterized in that** the collecting ribs (24), which are disposed in at least one row (27A, 27B), are disposed at a distance from the marginal rib (14) so that the collecting ribs (24) are always located in the intake region of the at least one centre belt (8, 8A, 8B).

11. The draper cutting unit (1) according to claim 9 or claim 10, **characterized in that** starting from the cutter bar (6), the collecting ribs (24) are disposed above the lower third of the side belt (7).

12. The draper cutting unit (1) according to one of claims 9 to 11, **characterized in that** the collecting ribs (24) extend substantially to the conveying ribs (23).

13. The draper cutting unit (1) according to one of claims 1 to 12, **characterized in that** the centre segment (3) has at least one centre belt (8) which is orientated perpendicularly to the conveying direction (FR) of the side belts (7).

14. The draper cutting unit (1) according to one of claims 1 to 12, **characterized in that** the centre segment (3) has two centre belts (8A, 8B) which are disposed next to each other in a V-shape and which are disposed so as to converge when viewed in their conveying direction (FR).

## Revendications

1. Barre de coupe à tapis (1), comprenant :
- un châssis (2) comportant un segment central (3), présentant au moins un convoyeur central (8, 8A, 8B) circulant sans fin, et deux segments latéraux (4) présentant chacun au moins un convoyeur latéral (7) circulant sans fin,
- une barre porte-lames (6) souple qui est disposée sur des bras porteurs articulés de manière pivotante sur le châssis (2), les convoyeurs latéraux (7) étant agencés pour suivre un mouvement de 1a barre porte-lames (6) souple,
**caractérisée en ce que**
le convoyeur latéral (7) respectif présente une nervure de délimitation (14) périphérique qui se trouve dans la zone de prise en charge de produits (13) adjacente à la barre porte-lames (6) et qui est chevauchée par un joint de convoyeur (15) s'étendant sensiblement sur la largeur du segment latéral (4), le joint de convoyeur (15) étant fixé à 1a barre porte-lames (6) au moyen d'éléments de support (16) réalisés de manière segmentée, et les éléments de support (16) exerçant une force de pression sur le joint de convoyeur (15), afin de presser celui-ci contre la nervure de délimitation (14).

2. Barre de coupe à tapis (1) selon 1a revendication 1, **caractérisée en ce que** le joint de convoyeur (15) est constitué d'un matériau souple, notamment d'une matière plastique ou de caoutchouc.

3. Barre de coupe à tapis (1) selon la revendication 1 ou 2, **caractérisée en ce qu'**une zone formée entre la nervure de délimitation (14) et les éléments de support (16) et ne présentant pas de chevauchement est recouverte par le joint de convoyeur (15).

4. Barre de coupe à tapis (1) selon une des revendications 1 à 3, **caractérisée en ce que** la nervure de délimitation (14) forme avec le joint de convoyeur (15) une barrière d'une hauteur comprise entre 10 mm et 15 mm.

5. Barre de coupe à tapis (1) selon une des revendications 1 à 4, **caractérisée en ce que** la nervure de délimitation (14) présente une section transversale sensiblement parallélépipédique ou trapézoïdale.

6. Barre de coupe à tapis (1) selon une des revendications 1 à 5, **caractérisée en ce que** l'élément de support (16) respectif présente, par rapport au convoyeur latéral (7) respectif, une partie avant (18) inclinée, tournée vers la barre porte-lames (6), et une partie arrière (19) sensiblement parallèle, tournée vers le convoyeur latéral (7).

7. Barre de coupe à tapis (1) selon la revendication 6, **caractérisée en ce que** les éléments de support (16) sont réalisés comme éléments profilés réalisés à partir d'une tôle métallique.

8. Barre de coupe à tapis (1) selon une des revendications 1 à 7, **caractérisée en ce que** le joint de convoyeur (15) réalisé en forme de bande et présentant une section parallélépipédique est réalisé en une ou plusieurs parties.

9. Barre de coupe à tapis (1) selon une des revendications 1 à 8, **caractérisée en ce qu'**il est prévu sur la surface des convoyeurs latéraux (7), entre des nervures de convoyage (23) s'étendant perpendiculairement à la nervure de délimitation (14) et disposées de manière équidistante les unes par rapport aux autres, respectivement au moins une nervure de collecte (24) en forme de creux ou en forme d'arc, dont le côté ouvert est détourné de la barre porte-lames (6).

10. Barre de coupe à tapis (1) selon la revendication 9, **caractérisée en ce que** les nervures de collecte (24) disposées dans au moins une rangée (27A, 27B) sont installées à distance de la nervure de délimitation (14), de sorte que les nervures de collecte (24) se trouvent toujours dans la zone de prise en charge du convoyeur central (8, 8A, 8B), au nombre d'au moins un.

11. Barre de coupe à tapis (1) selon la revendication 9 ou 10, **caractérisée en ce que**, partant de la barre porte-lames (6), les nervures de collecte (24) sont disposées au-dessus du tiers inférieur du convoyeur latéral (7).

12. Barre de coupe à tapis (1) selon une des revendications 9 à 11, **caractérisée en ce que** les nervures de collecte (24) s'étendent sensiblement jusqu'aux nervures de convoyage (23).

13. Barre de coupe à tapis (1) selon une des revendications 1 à 12, **caractérisée en ce que** le segment central (3) présente au moins un convoyeur central (8) qui est orienté perpendiculairement au sens de convoyage (FR) des convoyeurs latéraux (7).

14. Barre de coupe à tapis (1) selon une des revendications 1 à 12, **caractérisée en ce que** le segment central (3) présente deux convoyeurs centraux (8A, 8B) qui sont disposés l'un à côté de l'autre en forme de V et qui, vus dans leur sens de convoyage (FR), sont disposés de manière à circuler l'un en direction de l'autre.
